# EUROPÄISCHE PATENTSCHRIFT

(11) **EP 3 499 659 B1**
(45) Veröffentlichungstag und Bekanntmachung des Hinweises auf die Patenterteilung: **01.09.2021**
(21) Anmeldenummer: 17382844.3
(22) Anmeldetag: 12.12.2017
(51) Int. Cl.: H02B 1/056, H02B 1/20, H02B 1/21, H01H 9/40, H01H 71/08, H01H 73/08

(54) **ADAPTERVORRICHTUNG UND LEISTUNGSSCHALTERAUFBAU**
ADAPTER DEVICE AND CIRCUIT BREAKER STRUCTURE
DISPOSITIF ADAPTATEUR ET ENSEMBLE DISJONCTEUR

(43) Veröffentlichungstag der Anmeldung: 19.06.2019
(73) Patentinhaber: Siemens Aktiengesellschaft, 80333 München (DE)
(72) Erfinder: Möbis, Florian, 90409 Nürnberg (DE); Rafael, Lorenzo Castano, 28035 Madrid (ES)

(56) Entgegenhaltungen:
- EP-A1- 1 267 375
- EP-A2- 2 104 129
- WO-A1-2016/042290
- FR-A1- 2 967 832

## Beschreibung

Die vorliegende Erfindung betrifft eine Adaptervorrichtung zur einphasigen Kopplung eines Leistungsschalters mit einer Sammelschiene. Ferner betrifft die Erfindung einen Leistungsschalteraufbau mit einem Leistungsschalter, einer Sammelschiene und einer erfindungsgemäßen Adaptervorrichtung.

Elektrische sowie elektromechanische Komponenten herkömmlicher Spannungsnetze, insbesondere Niederspannungsnetze, sind zumeist für einen kontinuierlichen Betrieb ausgelegt. Für moderne Spannungsnetze sind solche Komponenten nicht oder nur bedingt geeignet, da moderne Spannungsnetze wesentlich größeren Anforderungen gerecht werden müssen. Einerseits müssen diese Spannungsnetze immer höhere und variablere Lasten, wie zum Beispiel durch Elektromobilität und Wärmepumpen bedingt, bedienen können, als auch starken Spanungsschwankungen, insbesondere aufgrund der Stromerzeugung mittels regenerativer Energien, gerecht werden und somit eine hohe Flexibilität aufweisen. Die Digitalisierung ist ein bekanntes Mittel zur Erhöhung der Flexibilität von Spannungsnetzen.

Für die Digitalisierung bereits installierter Anlagen bzw. Sammelschienensysteme ist eine aufwändige Umrüstung des Anlagenaufbaus erforderlich. Die Anlagen bzw. Sammelschienensysteme weisen Sammelschienen sowie an den Sammelschienen angeordnete und mit diesen elektrisch gekoppelte Sicherungslasttrennschalter in Leistenbauform auf. Bei der Umrüstung müssen mit den derzeit zur Verfügung stehenden Mitteln oftmals die kompletten Anlagen bzw. Sammelschienensystems umgebaut oder ausgetauscht werden. Dies liegt zum einen daran, dass für die Digitalisierung verwendete Leistungsschalter in der Regel bauartbedingt bei gleicher Schaltstromstärke größere Abmessungen als herkömmliche Leistungsschalter aufweisen. Überdies weisen herkömmliche Adapter zur Umrüstung bestehender Sammelschienensysteme keine separate Phasenabsicherung auf, da die Phasen L1, L2 und L3 des Spannungsnetzes über die jeweiligen Strompfade nur eines Leistungsschalters geführt sind. Im Falle eines Kurzschlusses nur einer Phase hat dies zur Folge, dass die beiden übrigen Phasen mit abgeschaltet werden.

In der WO 2016/042290 A1 wird eine Stromverwaltungsvorrichtung offenbart, die einen Leistungsschalter umfasst, der mit einer Kopplungsanordnung verbunden ist, die die Anschlüsse einer Sicherungseinheit mit dem Leistungsschalter verbindet. Die Kupplungsbaugruppe enthält eine Sicherung oder eine Verbindungsstange, die entfernbar in der Kupplungsbaugruppe gelagert sein kann und einen elektrischen Pfad für den Stromfluss durch die Kupplungsbaugruppe und den Leistungsschalter bereitstellt.

Die FR 2 967 832 A1 offenbart eine Vorrichtung mit einer Integrations- oder Verankerungseinheit, die in Stromversorgungsschienen eines Paneels integriert ist. Eine Verbindungseinheit befindet sich an einem Ausrichtungsende und ist mit einem Leiter einer Sammelschienenverbindungsleitung der Platte verbunden. Die Anschlusseinheit ist um einen Leitungsleiter erweitert, der von Gehäusen einer Trennvorrichtung zugänglich ist.

In der EP 2 104 129 A2 ist eine Adaptervorrichtung zum Anschluss eines Niederspannungsschaltgerätes an ein Verteilersammelschienensystem beschrieben. Die Adaptervorrichtung umfasst einen Körper, der mit einer Vorderwand versehen ist, die mit der Schaltvorrichtung verbunden werden kann, und eine Rückwand, die der Vorderwand gegenüberliegt. Die Vorrichtung umfasst erste elektrische Anschlüsse, die einen der Verteilungssammelschienen und zweiten elektrischen Anschlüsse elektrisch kontaktieren können. Die Vorrichtung umfasst auch erste elektrische Anschlüsse, die mit ersten elektrischen Anschlüssen elektrisch verbunden sind und mit entsprechenden dritten elektrischen Anschlüssen der Schalteinrichtung koppelbar sind.

Es ist daher die Aufgabe der vorliegenden Erfindung, die Nachteile bei zuvor beschriebenen Sammelschienensystemen bzw. Anlagen und Adaptervorrichtungen zu beheben oder zumindest teilweise zu beheben. Es ist insbesondere die Aufgabe der vorliegenden Erfindung, eine Vorrichtung sowie einen Leistungsschalteraufbau zu schaffen, mit welchen mit einfachen Mitteln sowie kostengünstig eine Umrüstung einer herkömmlichen im Spannungsnetz befindlichen Anlage mit Sicherungslasttrennleisten in Leistenbauform auf Leistungsschalter gewährleistet ist.

Voranstehende Aufgabe wird durch die Patentansprüche gelöst. Demnach wird die Aufgabe durch eine Adaptervorrichtung mit den Merkmalen des unabhängigen Anspruchs 1 und ein mit den Merkmalen des nebengeordneten Anspruchs 6 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Adaptervorrichtung beschrieben sind, selbstverständlich auch im Zusammenhang mit dem erfindungsgemäßen Leistungsschalteraufbau und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine Adaptervorrichtung zur Kopplung eines Leistungsschalters mit einer Sammelschiene gelöst. Die Adaptervorrichtung weist einen Grundkörper, einen Strompfadverteiler und einen Strompfadzusammenführer auf. Der Grundkörper weist eine Leistungsschalterseite und eine von der Leistungsschalterseite abgewandte Sammelschienenseite auf, welche im Montierten Zustand der Sammelschiene zugewandt ist. Der Strompfadverteiler weist einen Verteilereingang zum elektrischen Koppeln mit einem Strompfad der Sammelschiene und drei Verteilerausgänge zum Aufteilen des Strompfads der Sammelschiene auf drei Strompfade des Leistungsschalters auf. Der Strompfadzusammenführer weist drei Zusammenführereingänge zum Zusammenführen der drei Strompfade des Leistungsschalters zu einem Strompfad der Sammelschiene und einen Zusammenführerausgang zum elektrischen Koppeln mit dem Strompfad der Sammelschiene auf. Auf der Leistungsschalterseite ist eine Aufnahme zur Aufnahme des Leistungsschalters ausgebildet. Der Strompfadverteiler ist derart an der Aufnahme des Grundkörpers angeordnet, dass die Verteilerausgänge durch Anordnen eines Leistungsschalters in der Aufnahme mit jeweils einem Stromeingang des Leistungsschalters elektrisch koppelbar sind. Der Strompfadzusammenführer ist derart an der Aufnahme des Grundkörpers angeordnet, dass die Zusammenführereingänge durch Anordnen eines Leistungsschalters in der Aufnahme mit jeweils einem Stromausgang des Leistungsschalters elektrisch koppelbar sind. Der Verteilereingang und der Zusammenführerausgang sind derart an dem Grundkörper angeordnet, dass diese bei an der Sammelschiene montierter Adaptervorrichtung mit einem Strompfad der Sammelschiene elektrisch gekoppelt sind.

Der Grundkörper weist eine längliche Ausbildung mit einem vorzugsweise u-förmigen Querschnitt auf, und ist vorzugsweise zur mechanischen Kopplung mit einer Sammelschiene eines herkömmlichen 185 mm Sammelschienensystems ausgebildet. Vorzugsweise weist der Grundkörper eine Breite von etwa 100 mm auf. Die Leistungsschalterseite und die Sammelschienenseite sind auf voneinander abgewandten Seiten des Grundkörpers ausgebildet. Die Aufnahme auf der Leistungsschalterseite des Grundkörpers kann Halte- und/oder Rastelemente zum Halten des Leistungsschalters aufweisen. Zusätzlich oder alternativ kann die Aufnahme eine Ausrichtkante zum Ausrichten des Leistungsschalters zur Aufnahme aufweisen, um eine Montage des Leistungsschalters an der Aufnahme zu verbessern.

Der Strompfadverteiler und der Strompfadzusammenführer sind vorzugsweise an dem Grundkörper gehalten oder an diesem fixiert, beispielsweise durch Kleben, Eingießen, Clipsen oder dergleichen. Auf diese Weise weisen der Strompfadverteiler und der Strompfadzusammenführer eine konstante bzw. definierte relative Lage zueinander auf. Dies erleichtert die Ausrichtung eines herkömmlichen Leistungsschalters bzw. Kompaktleistungsschalters zu dem Strompfadverteiler sowie dem Strompfadzusammenführer und somit die Montage des Leistungsschalters an der Aufnahme der Adaptervorrichtung.

Der Strompfadverteiler und der Strompfadzusammenführer sind vorzugsweise gabelförmig ausgebildet, wobei die Verteilerausgänge und die Zusammenführereingänge den Zinken einer Gabel entsprechen. Die Verteilerausgänge sind über den Verteilereingang, die Zusammenführereingänge sind über den Zusammenführerausgang miteinander verbunden. Der Strompfadverteiler und der Strompfadzusammenführer weisen ein elektrisch leitendes Material, insbesondere Kupfer, auf, bzw. sind aus einem elektrisch leitenden Material gebildet. Die Verteilerausgänge und die Zusammenführereingänge sind vorzugsweise zylinderförmig ausgebildet und weisen einen Durchmesser auf, welcher eine elektrische Kopplung durch Einstecken in sammelschienenseitige Stromeingänge bzw. Stromausgänge eines Leistungsschalters der Größe NH1 bis NH3 bzw. einer maximalen Breite von 100mm zulässt bzw. begünstigt. Abstehende Endbereiche der Verteilerausgänge und der Zusammenführereingänge weisen vorzugsweise eine umlaufende Fase zur besseren Montierbarkeit des Leistungsschalters auf. Der Verteilereingang und der Zusammenführerausgang sind derart ausgebildet und am Grundkörper angeordnet, dass diese mit jeweils einem Strompfad, vorzugsweise jeweils einem anderen von drei verfügbaren Strompfaden, einer herkömmlichen Sammelschiene eines 185mm Sammelschienensystems elektrisch koppelbar sind.

Die Verteilerausgänge und Zusammenführereingänge erstrecken sich vorzugsweise derart durch den Grundkörper bzw. mindestens eine Ausnehmung des Grundkörpers, dass die Verteilerausgänge und Zusammenführereingänge jeweils teilweise auf der Sammelschienenseite und teilweise auf der Leistungsschalterseite angeordnet sind. Der Verteilereingang und der Zusammenführerausgang sind vorzugsweise vollständig auf der Sammelschienenseite des Grundkörpers angeordnet.

Eine erfindungsgemäße Adaptervorrichtung den Vorteil, dass mit einfachen Mitteln sowie auf eine kostengünstige Art und Weise eine Umrüstung eines Leistungsschalteraufbaus mit herkömmlichen Sicherungslastrennschaltern in Leistenbauform durch Leistungsschalter möglich ist, wobei jede Phase der Sammelschiene des Sammelschienensystems über jeweils einen Leistungsschalter separat schaltbar ist. Somit sind auch bei existierenden Anlagen bzw. Sammelschienensystemen Leistungsschalter mit Fernsteuerung und/oder Ferndiagnose und/oder Messfunktionen oder dergleichen kostengünstig nachrüstbar.

Gemäß einer bevorzugten Weiterentwicklung der Erfindung kann bei einer Adaptervorrichtung vorgesehen sein, dass der Grundkörper drei erste Durchführungen zum Durchführen der drei Verteilerausgänge des Strompfadverteilers und drei zweite Durchführungen zum Durchführen der Zusammenführereingänge des Strompfadzusammenführers aufweist. Vorzugsweise sind der Strompfadverteiler und der Strompfadzusammenführer derart an dem Grundkörper gehalten bzw. fixiert, dass auf der Leistungsschalterseite die Verteilerausgänge jeweils durch eine erste Durchführung und die Zusammenführereingänge jeweils durch eine zweite Durchführung hervorragen. Derartige Durchführungen haben den Vorteil, dass eine Fixierung des Strompfadverteilers und des Strompfadzusammenführers am Grundkörper somit verbesserbar ist. Ferner können somit Abstände zwischen benachbarten Verteilerausgängen und benachbarten Zusammenführereingängen besser konstant bzw. im Wesentlichen konstant gehalten werden, sodass die Montage des Leistungsschalters verbessert ist.

Es ist erfindungsgemäß bevorzugt, dass an dem Grundkörper drei Aufnahmen ausgebildet sind, wobei die Adaptervorrichtung für jede Aufnahme einen Strompfadverteiler und einen Strompfadzusammenführer aufweist, wobei der Strompfadverteiler und der Strompfadzusammenführer jeweils einer Aufnahme zur elektrischen Kopplung mit jeweils einem gemeinsamen Strompfad der Sammelschiene ausgebildet sind, und wobei Strompfadverteiler und Strompfadzusammenführer unterschiedlicher Aufnahmen zur elektrischen Kopplung mit unterschiedlichen Strompfaden der Sammelschiene ausgebildet sind. Die drei Strompfadverteiler bzw. die drei Strompfadzusammenführer der drei Aufnahmen sind vorzugsweise jeweils wie voranstehend beschrieben ausgebildet, wobei sich die drei Strompfadverteiler bzw. die drei Strompfadzusammenführer insbesondere in der elektrischen Koppelbarkeit mit jeweils unterschiedlichen Strompfaden der Sammelschiene voneinander unterscheiden. Der Strompfadverteiler und der Strompfadzusammenführer einer Aufnahme sind jeweils mit demselben Strompfad der Sammelschiene elektrisch koppelbar. Auf diese Weise ist es auf einfache Weise sowie kostengünstig möglich, drei Phasen einer Sammelschiene separat voneinander über jeweils einen Leistungsschalter pro Phase zu schalten.

Weiter bevorzugt weist der Grundkörper einen elektrischen Isolator auf oder ist zumindest im Wesentlichen aus einem elektrischen Isolator gebildet. Die Aufnahme ist vorzugsweise derart ausgebildet, dass der Leistungsschalter derart an der Aufnahme montierbar ist, dass die Strompfadverteilerausgänge sowie die Strompfadzusammenführereingänge durch den Leistungsschalter und den Grundkörper nach außen isoliert sind. Ein elektrischer Isolator hat den Vorteil, dass die Gefahr eines Stromschlags durch eine Bedienperson oder eines Kurzschlusses hierdurch reduziert ist.

In einer besonders bevorzugten Ausgestaltung der Erfindung weist der Grundkörper eine seitliche Schürze auf, welche zum seitlichen Isolieren der Sammelschiene und/oder zum Bilden einer Halteverbindung, insbesondere einer Rastverbindung, mit der Sammelschiene ausgebildet ist. Vorzugsweise erstreckt sich die Schürze über mindestens zwei entgegengesetzte Seiten, insbesondere Längsseiten, des Grundkörpers. Weiter bevorzugt ist die Schürze über die Seiten des Grundkörpers umlaufend bzw. im Wesentlichen umlaufend ausgebildet. Die Schürze kann zum Bilden der Halteverbindung erfindungsgemäß ein Federelement und/oder eine Rastnase und/oder einen Clip und/oder eine Schraubendurchführung aufweisen. Eine Schürze hat den Vorteil, dass eine Seite der Sammelschiene von dieser abdeckbar und nach außen isolierbar ist. Ferner ermöglicht eine solche Schürze mit einfachen Mitteln sowie kostengünstig eine verbesserte Fixierung der Adaptervorrichtung an der Sammelschiene.

Gemäß einem zweiten Aspekt der Erfindung wird die Aufgabe durch einen Leistungsschalteraufbau mit einer Sammelschiene, welche drei elektrische Leiter aufweist und drei einphasig schaltenden Leistungsschaltern gelöst. Erfindungsgemäß weist der Leistungsschalteraufbau eine erfindungsgemäße Adaptervorrichtung auf, wobei die Leistungsschalter über die Adaptervorrichtung mit der Sammelschiene elektrisch und mechanisch gekoppelt sind .

Die Sammelschiene ist vorzugsweise gemäß einer Sammelschiene eines herkömmlichen Sicherungslastschalters für 185 mm Sammelschienensysteme ausgebildet. Der Leistungsschalter ist vorzugsweise gemäß einem Leistungsschalter, insbesondere einem Kompaktleistungsschalter für Niederspannungen und Ströme von ca. 160A pro Phase bzw. etwa 400A insgesamt, ausgebildet.

Bei dem beschriebenen Leistungsschalteraufbau ergeben sich sämtliche Vorteile, die bereits zu einer Adaptervorrichtung gemäß dem ersten Aspekt der Erfindung beschrieben worden sind. Demnach hat der erfindungsgemäße Leistungsschalteraufbau gegenüber herkömmlichen Leistungsschalteraufbauten den Vorteil, dass dieser mit einfachen Mitteln sowie auf eine kostengünstige Art und Weise durch eine Umrüstung eines herkömmlichen Sammelschienensystems durch Leistungsschalter herstellbar ist, wobei jede Phase des Sammelschienensystems über jeweils einen Leistungsschalter separat schaltbar ist. Der Leistungsschalteraufbau ermöglicht somit bei existierenden Anlagen bzw. Sammelschienensystemen den Einsatz von Leistungsschaltern mit Fernsteuerung und/oder Ferndiagnose und/oder Messfunktionen oder dergleichen.

Vorzugsweise weist die Sammelschiene drei separate Strompfade auf, wobei die drei Leistungsschalter mit jeweils einem anderen der drei Strompfade elektrisch gekoppelt sind. Mit anderen Worten sind der einer ersten Aufnahme zugeordnete Verteilereingang und Zusammenführerausgang mit einem ersten Strompfad, der einer zweiten Aufnahme zugeordnete Verteilereingang und Zusammenführerausgang einer einem zweiten Strompfad, und der einer dritten Aufnahme zugeordnete Verteilereingang und Zusammenführerausgang mit einem dritten Strompfad der Sammelschiene elektrisch gekoppelt. Auf diese Weise ist der in der ersten Aufnahme angeordnete Leistungsschalter zum Schalten der ersten Phase, der in der zweiten Aufnahme angeordnete Leistungsschalter zum Schalten der zweiten Phase, und der in der dritten Aufnahme angeordnete Leistungsschalter zum Schalten der dritten Phase der Sammelschiene ausgebildet.

Es ist bevorzugt, dass der Leistungsschalter zum Schalten eines Stroms je Phase von zwischen 120A und 180A, insbesondere zwischen 140A und 170A, und besonders bevorzugt von 160A ausgebildet ist. Derartige Leistungsschalter werden auch als Kompaktleistungsschalter bezeichnet und weisen vorzugsweise eine der Größen NH1 bis NH3 auf.

Gemäß einer bevorzugten Weiterbildung des erfindungsgemäßen Leistungsschalteraufbaus kann vorgesehen sein, dass der Leistungsschalter einen Motorantrieb zur Fernauslösung und/oder zur Fernzurücksetzung aufweist. Ein solcher Motorantrieb ist vorzugsweise kompakt in den Leistungsschalter integriert und hat den Vorteil, dass der Leistungsschalter auch über größere Distanzen ansteuerbar ist. Somit ist der Leistungsschalter beispielsweise aus der Ferne auslösbar oder nach einer Auslösung wieder zurücksetzbar. Auf diese Weise wird die Flexibilität des Leistungsschalteraufbaus weiter verbessert.

Vorzugsweise weist der Leistungsschalter eine Messvorrichtung zum Messen einer Stromstärke und/oder einen Hilfskontakt zum Übermitteln von Zustandsmeldungen und/oder eine Kommunikationsvorrichtung zum Datenaustausch auf. Auf diese Weise werden vom erfindungsgemäßen Leistungsschalteraufbau auf vorteilhafte Weise weitere Funktionen bereitgestellt, welche eine bessere Überwachung sowie ein Eingreifen aus der Ferne, beispielsweise aus einem Kontroll- bzw. Überwachungszentrum, ermöglichen.

Eine erfindungsgemäße Adaptervorrichtung sowie ein erfindungsgemäßer Leistungsschalteraufbau werden nachfolgend anhand von Zeichnungen näher erläutert. Es zeigen jeweils schematisch:
- Figur 1: in einer explodierten Ansicht eine bevorzugte Ausführungsform einer Adaptervorrichtung mit einer Sammelschiene,
- Figur 2: in einer perspektivischen Ansicht die Adaptervorrichtung und Sammelschiene aus Figur 1 in einem montierten Zustand, und
- Figur 3: in einer perspektivischen Ansicht eine bevorzugte Ausführungsform eines erfindungsgemäßen Leistungsschalteraufbaus.

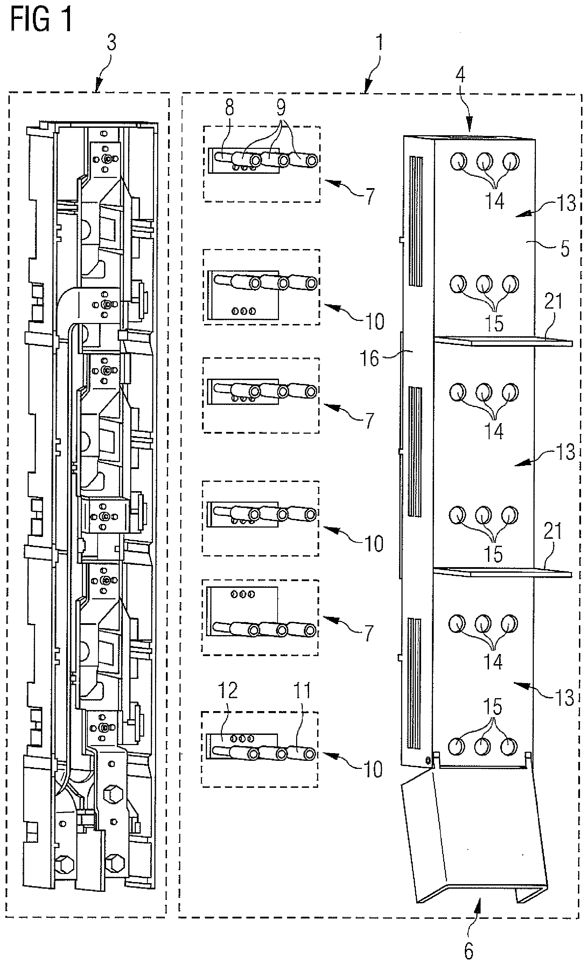

Elemente mit gleicher Funktion und Wirkungsweise sind in den Fig. 1 bis 3 jeweils mit denselben Bezugszeichen versehen.

In Fig. 1 ist eine bevorzugte Ausführungsform einer Adaptervorrichtung 1 mit einer Sammelschiene 3 schematisch in einer explodierten Ansicht dargestellt. Die Adaptervorrichtung 1 weist einen Grundkörper 4 mit einer von der Zeichenebene abgewandten Leistungsschalterseite 5 und einer der Zeichenebene zugewandten Sammelschienenseite 6 auf. An dem Grundkörper 4 sind drei separate Aufnahmen 13 ausgebildet, welche über Trennwände 21 voneinander separiert sind. Jede Aufnahme 13 weist drei nebeneinander angeordnete erste Durchführungen 14 und drei nebeneinander angeordnete zweite Durchführungen 15 auf. Ferner sind an dem Grundkörper 4 seitliche Schürzen 16 ausgebildet, welche sich in die Zeichenebene hinein erstrecken.

Überdies weist die Adaptervorrichtung 1 drei Strompfadverteiler 7 und drei Strompfadzusammenführer 10, welche jeweils paarweise einer Aufnahme 13 zugeordnet sind. Die Strompfadverteiler 7 weisen jeweils einen Verteilereingang 8 und drei an dem Verteilereingang 8 angeordnete Verteilerausgänge 9 auf, wobei die Verteilerausgänge 9 zum teilweisen Durchführen durch jeweils eine erste Durchführung 14 ausgebildet sind. Die Strompfadzusammenführer 10 weisen jeweils einen Zusammenführerausgang 12 und drei an dem Zusammenführerausgang 12 angeordnete Zusammenführereingänge 11 auf, wobei die Zusammenführereingänge 11 zum teilweisen Durchführen durch jeweils eine zweite Durchführung 15 ausgebildet sind. Die Verteilereingänge 8 der Strompfadverteiler 7 sind jeweils einem anderen Strompfad der Sammelschiene 3 zugeordnet. Die Zusammenführerausgänge 12 der den Strompfadverteilern 7 jeweils zugeordneten Strompfadzusammenführer 10 sind denselben Strompfaden zugeordnet.

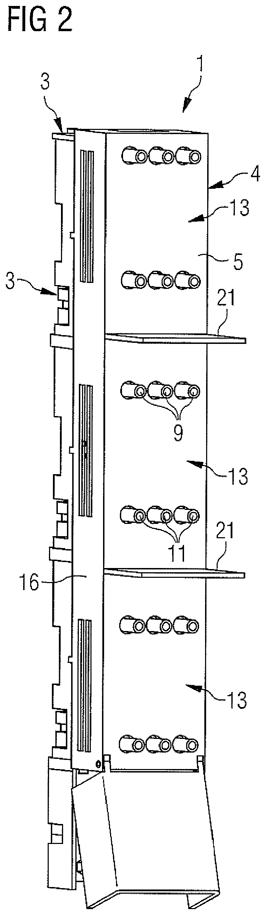

In Fig. 2 sind die Adaptervorrichtung 1 und Sammelschiene 3 aus Fig. 1 in einem montierten Zustand schematisch in einer perspektivischen Ansicht dargestellt. Wie aus Fig. 2 ersichtlich, ragen im Bereich der drei Aufnahmen 13 Endbereiche der Verteilerausgänge 9 jeweils durch eine erste Durchführung 14 des Grundkörpers 4 und Endbereiche der Zusammenführereingänge 11 jeweils durch eine zweite Durchführung 15 des Grundkörpers 4. Die Schürze 16 des Grundkörpers 4 ist seitlich mit der Sammelschiene 3 im Eingriff, sodass die Adaptervorrichtung 1 an der Sammelschiene 3 gehalten und die elektrische Kopplung der Strompfadverteiler 7 sowie der Strompfadzusammenführer 10 mit den elektrischen Pfaden der Sammelschiene 3 gewährleistet ist.

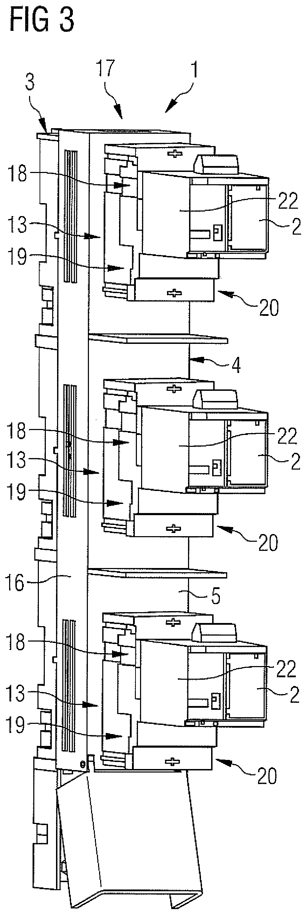

Fig. 3 zeigt eine bevorzugte Ausführungsform eines erfindungsgemäßen Leistungsschalteraufbaus 17, welches die Adaptervorrichtung 1 und die Sammelschiene 3 aus Fig. 2 aufweist. Des Weiteren weist der Leistungsschalteraufbau 17 drei Leistungsschalter 2 auf, welche jeweils an einer Aufnahme 13 des Grundkörpers 4 angeordnet und jeweils mit den hier nicht erkennbaren drei Verteilerausgängen 9 eines Strompfadverteilers 7 sowie den hier nicht erkennbaren drei Zusammenführereingängen 11 eines Strompfadzusammenführers 10 elektrisch gekoppelt sind. Die Leistungsschalter 2 weisen jeweils ein Gehäuse 22 auf, durch welche die Leistungsschalter 2 nach außen isoliert sind. Innerhalb des Gehäuses 22 weisen die Leistungsschalter 2 jeweils mehrere durch das Gehäuse 22 verdeckte Komponenten auf. Zu diesen Komponenten zählen insbesondere ein Motorantrieb 18 für eine Fernbedienbarkeit des Leistungsschalters 2, eine Messvorrichtung 19, insbesondere zum Messen von Stromstärken und/oder Spannungen, sowie ein Hilfskontakt 20 zur Übermittlung von Signalen, insbesondere von Signalen zur Spezifizierung eines Schaltzustands des Leistungsschalters 2.

### Bezugszeichenliste

- 1: Adaptervorrichtung
- 2: Leistungsschalter
- 3: Sammelschiene
- 4: Grundkörper
- 5: Leistungsschalterseite
- 6: Sammelschienenseite
- 7: Strompfadverteiler
- 8: Verteilereingang
- 9: Verteilerausgang
- 10: Strompfadzusammenführer
- 11: Zusammenführereingang
- 12: Zusammenführerausgang
- 13: Aufnahme
- 14: erste Durchführung
- 15: zweite Durchführung
- 16: Schürze
- 17: Leistungsschalteraufbau
- 18: Motorantrieb
- 19: Messvorrichtung
- 20: Hilfskontakt
- 21: Trennwand
- 22: Gehäuse

## Patentansprüche

1. Adaptervorrichtung (1) zur einphasigen Kopplung eines Leistungsschalters (2) mit einer Sammelschiene (3), aufweisend einen Grundkörper (4) mit einer Leistungsschalterseite (5) und einer von der Leistungsschalterseite (5) abgewandten Sammelschienenseite (6), welche im montierten Zustand der Sammelschiene zugewandt ist, einen Strompfadverteiler (7) mit einem Verteilereingang (8) zum elektrischen Koppeln mit einem Strompfad der Sammelschiene (3) und drei Verteilerausgängen (9) zum Aufteilen des Strompfads der Sammelschiene (3) auf drei Strompfade des Leistungsschalters (2) sowie einen Strompfadzusammenführer (10) mit drei Zusammenführereingängen (11) zum Zusammenführen der drei Strompfade des Leistungsschalters (2) zu einem Strompfad der Sammelschiene (3) und einem Zusammenführerausgang (12) zum elektrischen Koppeln mit dem Strompfad der Sammelschiene (3), wobei auf der Leistungsschalterseite (5) eine Aufnahme (13) zur Aufnahme des Leistungsschalters (2) ausgebildet ist,
**dadurch gekennzeichnet, dass**
der Strompfadverteiler (7) derart an der Aufnahme (13) des Grundkörpers (4) angeordnet ist, dass die Verteilerausgänge (9) durch Anordnen eines Leistungsschalters (2) in der Aufnahme mit jeweils einem Stromeingang des Leistungsschalters (2) elektrisch koppelbar sind, und dass der Strompfadzusammenführer (10) derart an der Aufnahme (13) des Grundkörpers (4) angeordnet ist, dass die Zusammenführereingänge (11) durch Anordnen eines Leistungsschalters (2) in der Aufnahme mit jeweils einem Stromausgang des Leistungsschalters (2) elektrisch koppelbar sind, wobei der Verteilereingang (8) und Zusammenführerausgang (12) derart an dem Grundkörper (4) angeordnet sind, dass diese bei an der Sammelschiene (3) montierter Adaptervorrichtung (1) mit einem Strompfad der Sammelschiene (3) elektrisch gekoppelt sind.

2. Adaptervorrichtung (1) nach Anspruch 1,
**dadurch gekennzeichnet,**
**dass** der Grundkörper (4) drei erste Durchführungen (14) zum Durchführen der drei Verteilerausgänge (9) des Strompfadverteilers (7) und drei zweite Durchführungen (15) zum Durchführen der Zusammenführereingänge (11) des Strompfadzusammenführers (10) aufweist.

3. Adaptervorrichtung (1) nach Anspruch 1 oder 2,
**dadurch gekennzeichnet,**
**dass** an dem Grundkörper (4) drei Aufnahmen (13) ausgebildet sind, wobei die Adaptervorrichtung (1) für jede Aufnahme (13) einen Strompfadverteiler (7) und einen Strompfadzusammenführer (10) aufweist, wobei der Strompfadverteiler (7) und der Strompfadzusammenführer (10) jeweils einer Aufnahme (13) zur elektrischen Kopplung mit jeweils einem gemeinsamen Strompfad der Sammelschiene (3) ausgebildet sind, und wobei Strompfadverteiler (7) und Strompfadzusammenführer (10) unterschiedlicher Aufnahmen (13) zur elektrischen Kopplung mit unterschiedlichen Strompfaden der Sammelschiene (3) ausgebildet sind.

4. Adaptervorrichtung (1) nach einem der vorherigen Ansprüche,
**dadurch gekennzeichnet,**
**dass** der Grundkörper (4) einen elektrischen Isolator aufweist oder zumindest im Wesentlichen aus einem elektrischen Isolator gebildet ist.

5. Adaptervorrichtung (1) nach einem der vorherigen Ansprüche,
**dadurch gekennzeichnet,**
**dass** der Grundkörper (4) eine seitliche Schürze (16) aufweist, welche zum seitlichen Isolieren der Sammelschiene (3) und/oder zum Bilden einer Halteverbindung mit der Sammelschiene (3) ausgebildet ist.

6. Leistungsschalteraufbau (17), aufweisend eine Sammelschiene (3) mit drei elektrischen Leitern und drei einphasig schaltenden Leistungsschaltern (2),
**dadurch gekennzeichnet,**
**dass** der Leistungsschalteraufbau (17) eine Adaptervorrichtung (1) nach einem der vorherigen Ansprüche aufweist, wobei die Leistungsschalter (2) über die Adaptervorrichtung (1) mit der Sammelschiene (3) elektrisch und mechanisch gekoppelt sind.

7. Leistungsschalteraufbau (17) nach Anspruch 6,
**dadurch gekennzeichnet,**
**dass** die Sammelschiene (3) drei separate Strompfade aufweist, wobei die Leistungsschalter (2) mit jeweils einem anderen der drei Strompfade elektrisch gekoppelt sind.

8. Leistungsschalteraufbau (17) nach Anspruch 6 oder 7,
**dadurch gekennzeichnet,**
**dass** der Leistungsschalter (2) zum Schalten eines Stroms je Phase von zwischen 120A und 180A, insbesondere zwischen 140A und 170A, und besonders bevorzugt von 160A ausgebildet ist.

9. Leistungsschalteraufbau (17) nach einem der Ansprüche 6 bis 8,
**dadurch gekennzeichnet,**
**dass** der Leistungsschalter (2) einen Motorantrieb (18) zur Fernauslösung und/oder zur Fernzurücksetzung aufweist.

10. Leistungsschalteraufbau (17) nach einem der Ansprüche 6 bis 9,
**dadurch gekennzeichnet,**
**dass** der Leistungsschalter (2) eine Messvorrichtung (19) zum Messen einer Stromstärke und/oder einen Hilfskontakt (20) zum Übermitteln von Zustandsmeldungen und/oder eine Kommunikationsvorrichtung zum Datenaustausch aufweist.

## Claims

1. Adapter device (1) for the single-phase coupling of a circuit breaker (2) to a busbar (3), having a base body (4) with a circuit breaker side (5) and a busbar side (6), which faces away from the circuit breaker side (5) and, in the assembled state, faces towards the busbar, a current path distributor (7) with a distributor input (8) for electrically coupling to a current path of the busbar (3) and three distributor outputs (9) for dividing the current path of the busbar (3) over three current paths of the circuit breaker (2) and a current path combining element (10) with three combining element inputs (11) for combining the three current paths of the circuit breaker (2) to form one current path of the busbar (3) and a combining element output (12) for electrically coupling to the current path of the busbar (3), wherein a receptacle (13) for receiving the circuit breaker (2) is formed on the circuit breaker side (5),
**characterized in that**
the current path distributor (7) is arranged on the receptacle (13) of the base body (4) in such a way that the distributor outputs (9) can be electrically coupled to a respective current input of the circuit breaker (2) by arranging a circuit breaker (2) in the receptacle, and **in that** the current path combining element (10) is arranged on the receptacle (13) of the base body (4) in such a way that the combining element inputs (11) can be electrically coupled to a respective current output of the circuit breaker (2) by arranging a circuit breaker (2) in the receptacle, wherein the distributor input (8) and the combining element output (12) are arranged on the base body (4) in such a way that they are electrically coupled to a current path of the busbar (3) when the adapter device (1) is mounted on the busbar (3).

2. Adapter device (1) according to Claim 1,
**characterized in that**
the base body (4) has three first feed-throughs (14) for feeding through the three distributor outputs (9) of the current path distributor (7) and three second feed-throughs (15) for feeding through the combining element inputs (11) of the current path combining element (10).

3. Adapter device (1) according to Claim 1 or 2,
**characterized in that**
three receptacles (13) are formed on the base body (4), wherein the adapter device (1) has a current path distributor (7) and a current path combining element (10) for each receptacle (13), wherein the current path distributor (7) and the current path combining element (10) of a respective receptacle (13) are designed for electrical coupling to a respective common current path of the busbar (3), and wherein the current path distributor (7) and the current path combining element (10) of different receptacles (13) are designed for electrical coupling to different current paths of the busbar (3).

4. Adapter device (1) according to one of the preceding claims,
**characterized in that**
the base body (4) has an electrical insulator or is at least substantially formed from an electrical insulator.

5. Adapter device (1) according to one of the preceding claims,
**characterized in that**
the base body (4) has a lateral skirt (16), which is designed to laterally insulate the busbar (3) and/or to form a holding connection to the busbar (3).

6. Circuit breaker structure (17), having a busbar (3) with three electrical conductors and three circuit breakers (2) switching in a single phase,
**characterized in that**
the circuit breaker structure (17) has an adapter device (1) according to one of the preceding claims, wherein the circuit breakers (2) are electrically and mechanically coupled to the busbar (3) by means of the adapter device (1).

7. Circuit breaker structure (17) according to Claim 6,
**characterized in that**
the busbar (3) has three separate current paths, wherein the circuit breakers (2) are electrically coupled to a respective different one of the three current paths.

8. Circuit breaker structure (17) according to Claim 6 or 7,
**characterized in that**
the circuit breaker (2) is designed to switch one current for each phase of between 120A and 180A, in particular between 140A and 170A, and particularly preferably of 160A.

9. Circuit breaker structure (17) according to one of Claims 6 to 8,
**characterized in that**
the circuit breaker (2) has a motor drive (18) for remote release and/or for remote reset.

10. Circuit breaker structure (17) according to one of Claims 6 to 9,
**characterized in that**
the circuit breaker (2) has a measurement device (19) for measuring a current intensity and/or an auxiliary contact (20) for transmitting state reports and/or a communication device for data exchange.

## Revendications

1. Dispositif adaptateur (1) pour le couplage monophasé d'un commutateur de puissance (2) avec une barre collectrice (3), comprenant un corps de base (4) avec un côté de commutateur de puissance (5) et un côté de barre collectrice (6) opposé au côté de commutateur de puissance (5), qui, dans l'état monté, est orienté vers la barre collectrice, un répartiteur de trajets de courant (7) avec une entrée de répartiteur (8) pour le couplage électrique avec un trajet de courant de la barre collectrice (3) et trois sorties de répartiteur (9) pour la répartition du trajet de courant de la barre collectrice (3) sur trois trajets de courant du commutateur de puissance (2) ainsi qu'un dispositif de regroupement de trajets de courant (10) avec trois entrées de dispositif de regroupement (11) pour le regroupement des trois trajets de courant du commutateur de puissance (2) en un trajet de courant de la barre collectrice (3) et une sortie de dispositif de regroupement (12) pour le couplage électrique avec le trajet de courant de la barre collectrice (3), dans lequel, sur le côté du commutateur de puissance (5), est réalisé un logement (13) pour le logement du commutateur de puissance (2),
**caractérisé en ce que**
le répartiteur de trajets de courant (7) est disposé au niveau du logement (13) du corps de base (4) de façon à ce que les sorties du répartiteur (9) peuvent être couplées électriquement respectivement avec une entrée de courant du commutateur de puissance (2) grâce à la disposition d'un commutateur de puissance (2) dans le logement et **en ce que** le dispositif de regroupement de trajets de courant (10) est disposé au niveau du logement (13) du corps de base (4) de façon à ce que les entrées du dispositif de regroupement (11) peuvent être couplées électriquement respectivement avec une sortie de courant du commutateur de puissance (2) grâce à la disposition d'un commutateur de puissance (2) dans le logement, dans lequel l'entrée du répartiteur (8) et la sortie du dispositif de regroupement (12) sont disposées sur le corps de base (4) de façon à ce qu'elles soient couplées électriquement avec un trajet de courant de la barre collectrice (3) lorsque le dispositif adaptateur (1) est monté sur la barre collectrice (3).

2. Dispositif adaptateur (1) selon la revendication 1,
**caractérisé en ce que**
le corps de base (4) comprend trois premiers passages (14) pour le passage des trois sorties de répartiteur (9) du répartiteur de trajets de courant (7) et trois deuxièmes passages (15) pour le passage des entrées de dispositif de regroupement (11) du dispositif de regroupement de trajets de courant (10).

3. Dispositif adaptateur (1) selon la revendication 1 ou 2,
**caractérisé en ce que**
sur le corps de base (4), sont réalisés trois logements (13), dans lequel le dispositif adaptateur (1) comprend, pour chaque logement (13), un répartiteur de trajets de courant (7) et un dispositif de regroupement de trajets de courant (10), dans lequel le répartiteur de trajets de courant (7) et le dispositif de regroupement de trajets de courant (10) de chaque logement sont conçus pour le couplage électrique avec respectivement un trajet de courant commun de la barre collectrice (3), et dans lequel les répartiteurs de trajets de courant (7) et les dispositifs de regroupement de trajets de courant (10) de différents logements (13) sont conçus pour le couplage électrique avec différents trajets de courant de la barre collectrice (3).

4. Dispositif adaptateur (1) selon l'une des revendications précédentes,
**caractérisé en ce que**
le corps de base (4) comprend un isolateur électrique ou est constitué au moins globalement d'un isolateur électrique.

5. Dispositif adaptateur (1) selon l'une des revendications précédentes,
**caractérisé en ce que**
le corps de base (4) comprend un tablier latéral (16), qui est conçu pour l'isolation latérale de la barre collectrice (3) et/ou pour la formation d'une liaison de maintien avec la barre collectrice (3).

6. Structure de commutateur de puissance (17), comprenant une barre collectrice (3) avec trois conducteurs et trois commutateurs de puissance à commutation monophasée (2),
**caractérisée en ce que**
la structure de commutateur de puissance (17) comprend un dispositif adaptateur (1) selon l'une des revendications précédentes, dans lequel les commutateurs de puissance (2) sont couplés électriquement et mécaniquement avec la barre collectrice (3) par l'intermédiaire du dispositif adaptateur (1).

7. Structure de commutateur de puissance (17) selon la revendication 6,
**caractérisée en ce que**
la barre collectrice (3) comprend trois trajets de courant séparés, dans lequel les commutateurs de puissance (2) sont couplés électriquement respectivement avec un autre des trois trajets de courant.

8. Structure de commutateur de puissance (17) selon la revendication 6 ou 7,
**caractérisée en ce que**
le commutateur de puissance (2) est conçu pour la commutation d'un courant par phase entre 120 A et 180 A, plus particulièrement entre 140 A et 170 A et plus particulièrement de préférence de 160 A.

9. Structure de commutateur de puissance (17) selon l'une des revendications 6 à 8,
**caractérisée en ce que**
le commutateur de puissance (2) comprend un entraînement de moteur (18) pour le déclenchement à distance et/ou la réinitialisation à distance.

10. Structure de commutateur de puissance (17) selon l'une des revendications 6 à 9,
**caractérisée en ce que**
le commutateur de puissance (2) comprend un dispositif de mesure (19) pour la mesure d'une intensité de courant et/ou un contact auxiliaire (20) pour la transmission de messages d'état et/ou un dispositif de communication pour l'échange de données.
